# EUROPÄISCHE PATENTANMELDUNG

(11) **EP 4 404 590 A1**
(43) Veröffentlichungstag der Anmeldung: **24.07.2024**
(21) Anmeldenummer: 24151529.5
(22) Anmeldetag: 12.01.2024
(51) Int. Cl.: H04R 25/00, H04R 1/10

(54) **VERFAHREN ZUM BETRIEB EINES HÖRGERÄTS**

(30) Priorität: 19.01.2023 DE 102023200412
(71) Anmelder: Sivantos Pte. Ltd., Singapore 539775 (SG)
(72) Erfinder: WILSON, Cecil, 91058 Erlangen (DE); MANDERS, Alastair James, 91081 Erlangen (DE); BILERT, Sascha, 91058 Erlangen (DE)
(74) Vertreter: FDST Patentanwälte

(57) **Zusammenfassung**

Die Erfindung betrifft ein Verfahren (42) zum Betrieb eines Hörgeräts (4), insbesondere Hörhilfegerät, das einen Windgeräuschunterdrücker (24) und einen Bewegungssensor (32) aufweist. Der Windgeräuschunterdrücker (24) wird in Abhängigkeit von mittels des Bewegungssensors (32) erfassten Messdaten (46) eingestellt. Ferner betrifft die Erfindung ein Hörgerät (4).

## Beschreibung

Die Erfindung betrifft ein Verfahren zum Betrieb eines Hörgeräts und ein Hörgerät. Das Hörgerät weist jeweils einen Windgeräuschunterdrücker und einen Bewegungssensor auf. Bevorzugt ist das Hörgerät ein Hörhilfegerät.

Personen, die unter einer Verminderung des Hörvermögens leiden, verwenden üblicherweise ein Hörhilfegerät. Hierbei wird meist mittels eines Mikrofons, also eines elektromechanischen Schallwandlers, ein Umgebungsschall in ein elektrisches (Audio-/Schall-)Signal gewandelt, sodass der Umgebungsschall erfasst wird. Die elektrischen (Schall-)Signale werden mittels einer Verstärkerschaltung bearbeitet und mittels eines weiteren elektromechanischen Wandlers in Form eines Hörers in den Gehörgang der Person eingeleitet. Meist erfolgt zudem eine Bearbeitung der Schallsignale, wofür üblicherweise ein Signalprozessor der Verstärkerschaltung verwendet wird. Hierbei ist die Verstärkung auf einen etwaigen Hörverlust des Hörgeräteträgers abgestimmt.

Falls Wind auf das Mikrofon trifft, werden entstehende Windgeräusche erfasst und liegen folglich in dem Schallsignal vor. Infolgedessen werden die Windgeräusche ebenfalls, zum Teil bearbeitet, in den Gehörgang der Person eingeleitet, weswegen andere Bestandteile des elektrischen Signals, die beispielsweise zu einer Konversation mit einem Mitmenschen korrespondieren, von der Person nicht wahrgenommen oder nur mit Anstrengung werden können, weswegen ein Komfort vergleichsweise niedrig ist.

Als Abhilfe hiervon ist es beispielsweise möglich, das Mikrofon mit einer mechanischen Abschirmung zu versehen. Dies führt jedoch zu einer vergrößerten Baugröße des Hörgeräts, sodass dieses vergleichsweise sichtbar ist. Alternativ hierzu erfolgt eine Bearbeitung des elektrischen Signals, um das Windgeräusche zumindest teilweise herauszufiltern, Hierfür wird üblicherweise ein Windgeräuschunterdrücker verwendet. Mittels dessen werden meist nicht stationäre Anteile entfernt, die eine vergleichsweise niedrige Frequenz aufweisen. Sofern mehrere Mikrofoneinheiten vorhanden sind, mittels derer jeweils ein entsprechendes elektrisches Signal erstellt wird, werden die zueinander unkontrollierten Bestandteile der beiden elektrischen Signale herausgefiltert.

Falls die eingestellte Filterwirkung vergleichsweise gering ist, sind die Windgeräusche, wenn auch in verringertem Umfang, für die Person dennoch weiterhin wahrnehmbar, weswegen ein Komfort verringert ist. Falls dahingegen eine vergleichsweise umfangreiche Filterung erfolgt, ist es möglich, dass auch gewünschten Anteile in dem elektrischen Signal entfernt werden, sodass beispielsweise die Person einer Konversation nicht mehr vollständig folgen kann. Auch dies reduziert einen Komfort. Infolgedessen ist es erforderlich, bei der Einstellung des Windgeräuschunterdrückers einen Kompromiss zu wählen, weswegen in vergleichsweise windigen Situationen für den Träger des Hörgeräts auch weiterhin Windgeräusche wahrnehmbar sind. Dabei ist bei vergleichsweise windarmen Situationen ein Herausfiltern von gewünschten Bestandteilen weiterhin möglich.

Der Erfindung liegt die Aufgabe zugrunde, ein besonders geeignetes Verfahren zum Betrieb eines Hörgeräts sowie ein besonders geeignetes Hörgerät anzugeben, wobei insbesondere ein Komfort für einen Träger erhöht ist.

Hinsichtlich des Verfahrens wird diese Aufgabe durch die Merkmale des Anspruchs 1 und hinsichtlich des Hörgeräts durch die Merkmale des Anspruchs 7 erfindungsgemäß gelöst. Vorteilhafte Weiterbildungen und Ausgestaltungen sind Gegenstand der jeweiligen Unteransprüche.

Das Verfahren dient dem Betrieb eines Hörgeräts. Beispielsweise ist das Hörgerät ein Kopfhörer oder umfasst einen Kopfhörer. Alternativ ist das Hörgerät ein Headset, True Wireless Headphone, Hearable, Personal Sound Amplifier. Besonders bevorzugt ist das Hörgerät jedoch ein Hörhilfegerät. Das Hörhilfegerät dient der Unterstützung einer unter einer Verminderung des Hörvermögens leidenden Person. Mit anderen Worten ist das Hörhilfegerät ein medizinisches Gerät, mittels dessen beispielsweise ein partieller Hörverlust ausgeglichen wird. Das Hörhilfegerät ist beispielsweise ein "Receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. In einer weiteren Alternative ist das Hörhilfegerät ein Hinter-dem-Ohr-Hörhilfegerät ("Behind-the-Ear"-Hörhilfegerät), das hinter einer Ohrmuschel getragen wird.

Das Hörgerät ist vorgesehen und eingerichtet, am menschlichen Körper getragen zu werden. Mit anderen Worten umfasst das Hörgerät bevorzugt eine Haltevorrichtung, mittels deren eine Befestigung am menschlichen Körper möglich ist. Sofern es sich bei dem Hörgerät um ein Hörhilfegerät handelt, ist das Hörgerät vorgesehen und eingerichtet, beispielsweise hinter dem Ohr oder innerhalb eines Gehörgangs angeordnet zu werden. Insbesondere ist das Hörgerät kabellos und dafür vorgesehen und eingerichtet, zumindest teilweise in einen Gehörgang eingeführt zu werden. Besonders bevorzugt umfasst das Hörgerät einen Energiespeicher, mittels dessen eine Energieversorgung bereitgestellt ist.

Das Hörgerät umfasst geeigneterweise ein Mikrofon, das dem Erfassen von Schall dient. Insbesondere wird bei Betrieb mittels des Mikrofons ein Umgebungsschall erfasst, oder zumindest ein Teil hiervon. Bei dem Mikrofon handelt es sich insbesondere um einen elektromechanischen Schallwandler. Das Mikrofon weist beispielsweise lediglich eine einzige Mikrofoneinheit oder mehrere Mikrofoneinheiten auf, die miteinander wechselwirken. Jede der Mikrofoneinheiten weist zweckmäßigerweise eine Membran auf, die anhand von Schallwellen in Schwingungen versetzt wird, wobei die Schwingungen mittels eines entsprechenden Aufnahmegeräts, wie eines Magneten, der in einer Spule bewegt wird, in ein elektrisches Signal gewandelt wird. Somit ist es möglich, mittels der jeweiligen Mikrofoneinheit ein Audiosignal (elektrisches Signal/Schallsignal) zu erfassen, das auf dem auf die Mikrofoneinheit auftreffendem Schall basiert. Die Mikrofoneinheiten sind insbesondere unidirektional ausgestaltet. Das Mikrofon ist zweckmäßigerweise zumindest teilweise innerhalb eines Gehäuses des Hörgeräts angeordnet und somit zumindest teilweise geschützt.

Zweckmäßigerweise weist das Hörgerät einen Hörer zum Ausgeben eines Ausgabesignals auf. Das Ausgabesignal ist hierbei insbesondere ein elektrisches Signal. Der Hörer ist ein elektromechanischer Schallwandler, vorzugsweise ein Lautsprecher. Je nach Ausgestaltung des Hörgeräts ist im bestimmungsgemäßen Zustand der Hörer zumindest teilweise innerhalb eines Gehörgangs eines Trägers (Nutzers) des Hörgeräts, also einer Person, angeordnet oder zumindest akustisch mit diesem verbunden. Das Hörgerät dient insbesondere hauptsächlich dem Ausgeben des Ausgabesignals mittels des Hörers, wobei entsprechender Schall erstellt wird. Mit anderen Worten ist die Hauptfunktion des Hörgeräts das Ausgeben des Ausgabesignals. Das Ausgabesignal ist dabei insbesondere zumindest teilweise in Abhängigkeit des mittels des Mikrofons erfassten Schalls erstellt.

Das Hörgerät umfasst zweckmäßigerweise eine Signalverarbeitungseinheit (Signalverarbeitungsschaltung), die beispielsweise in dem Gehäuse angeordnet ist. Vorzugsweise ist hierbei die Signalverarbeitungseinheit signaltechnisch zwischen dem Mikrofon und dem etwaigen Hörer angeordnet, und das mittels des Mikrofons erstellte etwaige Audiosignal wird bei Betrieb zur Signalverarbeitungseinheit geleitet und dort insbesondere bearbeitet. Anschließend wird dieses zu dem Hörer geleitet, sodass das bearbeitete Audiosignal ausgegeben wird.

Die Signalverarbeitungseinheit ist geeigneterweise einstellbar. Mit anderen Worten ist es möglich, einzelne Parameter/Werte/Einzelwerte der Signalverarbeitungseinheit zu verändern. Die Signalverarbeitungsschaltung umfasst beispielsweise einen digitalen Signalprozessor (DSP) und/oder elektrische/elektronische Bauteile. Insbesondere umfasst die Signalverarbeitungseinheit einen Verstärker. Alternativ oder in Kombination hierzu umfasst die Signalverarbeitungseinheit eine Rauschunterdrückungseinheit ("adaptiv noise canceller"), eine adaptive Rückkopplungsunterdrückung ("adaptive feedback cancellation") und/oder eine Einstelleinheit für das Mikrofon des Hörgeräts, wobei beispielsweise in Abhängigkeit der Einstellung des Mikrofons eine Richtcharakteristik (Direktionalität) verändert oder zumindest angepasst wird. Insbesondere wird hierbei eine Richtcharakteristik des Mikrofons zwischen einer omnidirektionalen und einer gerichteten Aufnahme umgeschaltet. Zum Beispiel wird dabei eine Richtkeule des Mikrofons eingestellt, also insbesondere eine Beamweite und/oder Ausrichtung. Mit anderen Worten erfolgt eine Einstellung des Beamformers mittels der Signalverarbeitungseinheit.

Das Hörgerät weist ferner einen Windgeräuschunterdrücker auf, der zweckmäßigerweise adaptiv ausgestaltet ist. Hierbei ist der Windgeräuschunterdrücker eine Einheit zum Bearbeiten des elektrischen Signals/ Audiosignals und/oder ein Bestandteil der etwaigen Signalverarbeitungseinheit. Mittels des Windgeräuschunterdrückers (WNC, "wind noise canceller/ reduction") ist es hierbei möglich, in dem Audiosignal vorhandenen Windgeräusche zumindest teilweise zu entfernen. Insbesondere ist hierbei der Windgeräuschunterdrücker signaltechnisch zwischen dem etwaigen Mikrofon und dem Hörer angeordnet.

Vorzugsweise wird bei Betrieb mittels des Windgeräuschunterdrückers in dem zugeführten Signal, vorzugsweise im Audiosignal, nichtstationäre Anteile identifiziert, die insbesondere eine niedrige Frequenz aufweisen. Diese werden zweckmäßigerweise zumindest teilweise entfernt oder deren relativer Anteil verringert. Alternativ oder in Kombination hierzu werden beispielsweise, sofern mehrere derartige (Audio-)Signale vorhanden sind, von denen jedes mittels einer jeweiligen Mikrofoneinheit erstellt wurde, in diesen zueinander unkorrelierte Anteile identifiziert und diese entfernt/verringert. Die Verringerung der jeweiligen Anteile erfolgt insbesondere in Abhängigkeit einer Einstellung des Windgeräuschunterdrückers. Mit anderen Worten ist es möglich, den zu entfernenden Anteil mittels einer Einstellung des Windgeräuschunterdrückers vorzugeben oder zumindest zu beeinflussen.

Ferner weist das Hörgerät einen Bewegungssensor auf, der beispielsweise ein Beschleunigungssensor ist. Beispielsweise ist der Bewegungssensor ein Bestandteil eines Gyroskops oder mittels eines Gyroskops gebildet. Mittels des Bewegungssensors wird insbesondere lediglich eine relative Bewegung, insbesondere eine Beschleunigung, bei Betrieb erfasst. Bei Betrieb werden hierbei mittels des Bewegungssensors Messdaten erstellt, in denen die erfasste Bewegung zweckmäßigerweise hinterlegt ist. Sofern somit das Hörgerät bewegt wird, ist die Bewegung mittels des Bewegungssensors erfassbar. Falls das Hörgerät ein Hörhilfegerät ist, das insbesondere am Ohr getragen wird, ist es somit möglich, anhand der mittels des Bewegungssensors erstellten Messdaten eine Bewegung und/oder Ausrichtung des Kopfes des Hörgeräteträgers (Nutzer, Träger) zu bestimmen und vorzugsweise einen zeitlichen Verlauf der Bewegung des Kopfes. Vorzugsweise ist die etwaige Signalverarbeitungseinheit signaltechnisch mit dem Bewegungssensor gekoppelt, sodass mittels die mittels des Bewegungssensors erstellten Messdaten mittels der Signalverarbeitungseinheit ausgewertet werden können.

Gemäß dem Verfahren werden mittels des Bewegungssensors Messdaten erfasst. Hierbei entsprechen die Messdaten beispielsweise den direkt mittels des Sensors erstellten Daten und sind insbesondere unbearbeitet. Alternativ hierzu sind die Messdaten mittels des Bewegungssensors oder eines sonstigen Bestandteils des Hörgeräts bearbeitete Daten. Der Windgeräuschunterdrücker wird in Abhängigkeit der erfassten Messdaten eingestellt. Infolgedessen wird somit der Windgeräuschunterdrücker in Abhängigkeit einer Bewegung des Hörgeräts eingestellt, sodass bei unterschiedlichen Bewegungen des Hörgeräts der Windgeräuschunterdrücker in unterschiedlicher Weise eingestellt ist. Da das Hörgerät von einer Person getragen wird, und da bei unterschiedlichen Aktivitäten des Trägers eine unterschiedliche Bewegung des Kopfes erfolgt, wird der Windgeräuschunterdrücker in Abhängigkeit einer Aktivität des Trägers des Hörgeräts eingestellt.

Falls somit eine vergleichsweise umfangreiche Bewegung des Trägers erfolgt, also dieser beispielsweise einen Sport ausübt, wird der Windgeräuschunterdrücker zweckmäßigerweise derart eingestellt, dass der zu entfernende/unterdrückende Anteil vergrößert ist. Da derartige Tätigkeiten meist im Freien ausgeführt werden und bei derartigen Tätigkeiten vergleichsweise starke Bewegung des Kopfes des Trägers des Hörgeräts erfolgen, ist der Anteil der mittels des etwaigen Mikrofons erfassten Windgeräusche vergleichsweise hoch. Zudem führen derartige Kopfbewegungen zu einem hohen relativen Wind bezüglich des Hörgeräts und somit auch zu verstärkten Windgeräuschen. Da der Windgeräuschunterdrücker entsprechend eingestellt wird, werden die Windgeräusche vergleichsweise stark herausgefiltert, sodass diese von dem Träger lediglich gering wahrnehmbar sind. Dahingegen liegt meist bei einem vergleichsweise ruhig gehaltenen Hörgerät eine windarme Situation vor, beispielsweise ein Theaterbesuch. Bei geringen Bewegungen ist vorzugsweise der mittels des Windgeräuschunterdrückers herausgefiltert/unterdrückte Anteil verringert. Somit ist insbesondere ein Theatergenuss für den Hörgeräteträger erhöht. Auch ist insbesondere eine Verständlichkeit bei einer Konversation erhöht, da in diesem Fall ebenfalls lediglich eine vergleichsweise geringe Bewegung des Kopfes erfolgt. Aufgrund des Verfahrens wird der Hörgeräteträger daher vor einer Belastung mit vergleichsweise hohen Windgeräuschen bewahrt, wobei dennoch ein vergleichsweise geringes Herausfiltern von gewünschten Anteilen erfolgt, sofern das Hörgerät ruhig gehalten wird. Daher ist ein Komfort erhöht.

Beispielsweise werden in Abhängigkeit der mittels des Bewegungssensors erfassten Messdaten auch weitere Einstellungen des Hörgeräts durchgeführt. So wird insbesondere die etwaige (adaptive) Rauschunterdrückungseinheit und/oder die etwaige (adaptive) Rückkopplungseinheit entsprechend der Messdaten oder zumindest in Abhängigkeit hiervon eingestellt. Zumindest werden diese bevorzugt in Abhängigkeit der Einstellung des Windgeräuschunterdrückers eingestellt. So wird beispielsweise bei einer erhöhten Filterwirkung des Windgeräuschunterdrückers die adaptive Rauschunterdrückungseinheit derart eingestellt, dass vermehrt ein Rauschen herausgefiltert wird. Alternativ oder in Kombination hierzu wird beispielsweise die Einstellung des Mikrofons verändert. Insbesondere wird bei einer vergleichsweise umfangreichen Bewegung des Hörgeräts eine Richtwirkung des Mikrofons verändert. Vorzugsweise wird in diesem Fall eine Direktionalität verringert und beispielsweise das Mikrofon auf omnidirektional umgestellt.

Beispielsweise wird mittels eines weiteren Bewegungssensors, der insbesondere ein Bestandteil eines externen Geräts ist, ebenfalls eine Bewegung erfasst. Das externe Gerät ist zweckmäßigerweise signaltechnisch, vorzugsweise mittels Funks, mit dem Hörgerät gekoppelt und beispielsweise ein tragbares Gerät, vorzugsweise ein Smartphone oder ein sonstiges Wearable. Hierbei ist insbesondere sichergestellt, dass eine Entfernung des externen Geräts zu dem Hörgerät eine bestimmte Entfernung nicht überschreitet, wie zum Beispiel 5 m. Vorzugsweise werden mittels des externen Geräts weitere Messdaten des weiteren Beschleunigungssensors bereitgestellt, und der Windgeräuschunterdrücker wird auch in Abhängigkeit der weiteren Messdaten eingestellt. So ist es beispielsweise möglich, vergleichsweise schnelle Bewegung des Nutzers, beispielsweise im Rahmen eines Fahrradfahrens oder dergleichen, zu identifizieren, oder eine sonstige vergleichsweise schnelle Fortbewegung des Nutzers. In diesen Situationen tritt vermehrt Fahrtwind auf, der zu verstärkten Windgeräuschen führt. Vorzugsweise wird in diesem Fall der Windgeräuschunterdrücker derart eingestellt, dass ein verstärktes Herausfiltern von Störgeräuschen, also Windgeräuschen, erfolgt.

Insbesondere betrifft die Erfindung auch ein derartiges Hörgerätesystem, das externe Gerät und das Hörgerät umfasst, die signaltechnisch, vorzugsweise mittels Funks, miteinander gekoppelt oder koppelbar sind. Ferner betrifft die Erfindung ein Verfahren zum Betrieb eines derartigen Hörgerätesystems, welches das Verfahren zum Betrieb des Hörgeräts umfasst, wobei zusätzlich mittels des externen Geräts weitere Messdaten bereitgestellt werden, die mittels des weiteren Bewegungssensors des externen Geräts erstellt wurden. Hierbei erfolgt die Einstellung des Windgeräuschunterdrückers auch in Abhängigkeit der weiteren Messdaten.

Beispielsweise wird der mittels des Windgeräuschunterdrückers zu entfernende/unterdrückende Anteil des etwaigen Audiosignals mittels der Messdaten vorgegeben. Besonders bevorzugt jedoch wird eine maximale Unterdrückungsleistung des Windgeräuschunterdrückers in Abhängigkeit der Messdaten eingestellt. Mit anderen Worten wird nicht direkt der zu entfernende oder unterdrückende Anteil mittels der Messdaten vorgegeben, sondern der maximal entfernbare/unterdrückbare Anteil. Der tatsächliche/aktuell entfernte/unterdrückte Anteil wird vorzugsweise anhand von weiteren Eigenschaften und/oder Parametern vorgegeben, insbesondere anhand einer Analyse des etwaigen Audiosignals. Vorzugsweise wird der tatsächliche/aktuell entfernte/unterdrückte Anteil anhand von nichtstationären Bestandteilen und/oder der Bestandteile des Audiosignal mit vergleichsweise niedrigen Frequenzen vorgegeben. Somit ist es möglich, dass auch bei einer vergleichsweise hohen maximalen Unterdrückungsleistung lediglich ein geringer Anteil aus dem Audiosignal herausgefiltert, also entfernt, wird. Somit erfolgt auch weiterhin ein Teil des Einstellens des Windgeräuschunterdrückers anhand des Audiosignals. Somit ist ein vergleichsweise genaues Eingehen auf die aktuelle Situation möglich, wobei jedoch bei bestimmten Aktivitäten, bei denen insbesondere die Wahrscheinlichkeit von Windgeräuschen erhöht ist, die maximale Unterdrückungsleistung erhöht ist.

Alternativ oder in Kombination hierzu wird eine minimale Unterdrückungsleistung in Abhängigkeit der Messdaten eingestellt. Mit anderen Worten wird insbesondere der Anteil vorgegeben, der zumindest aus dem Audiosignal entfernt wird. Vorzugsweise ist die minimale Unterdrückungsleistung bei derartigen Messdaten erhöht, die zu einer vergleichsweise umfangreichen Bewegung des Hörgeräts korrespondieren, da dann mit verstärkten Windgeräuschen zu rechnen ist. Auf diese Weise ist sichergestellt, dass bei vergleichsweise umfangreichen Bewegungen des Hörgeräts, die bereits schon zu Windgeräuschen aufgrund der Relativbewegung führen, der herausgefilterte Anteil erhöht ist.

Alternativ oder in Kombination hierzu wird eine Anpassrate des Windgeräuschunterdrückers eingestellt, also wie schnell eine aktuelle Unterdrückungsleistung bei sich ändernden Parameter oder Eigenschaften des Audiosignals verändert wird. So wird insbesondere bei Messdaten, die zu einer umfangreichen Bewegung korrespondieren, die Anpassrate erhöht, sodass vergleichsweise schnell auf eine Änderung der Windgeräusche reagiert wird. Dahingegen wird bei vergleichsweise geringen Bewegungen des Hörgeräts die Anpassrate des Windgeräuschunterdrückers vergleichsweise gering gewählt, sodass kurzzeitig auftretende Geräusche nicht unterdrückt werden. Diese sind bei geringen Bewegungen meist nicht auf einen Wind zurückzuführen, sondern auf Schall, den der Träger wahrnehmen möchte.

Beispielsweise wird anhand der Messdaten kontinuierlich der Windgeräuschunterdrücker eingestellt. Besonders bevorzugt jedoch wird anhand der Messdaten eine Klassifikation einer Aktivität des Nutzers, also des Trägers, des Hörgeräts durchgeführt. In Abhängigkeit der jeweiligen Klasse wird dabei der Windgeräuschunterdrücker eingestellt. Mit anderen Worten sind mehrere diskrete Stufen für die Einstellung des Windgeräuschunterdrückers vorhanden, wobei jeder Stufe eine andere der Klassen zugeordnet ist. Insbesondere ist eine der Klassen ein Sitzen des Nutzers, eine der Klassen ist ein Gehen des Nutzers, eine der Klassen ist ein Rennen des Nutzers, und/oder ein der eine der Klassen ist ein Fahrradfahren des Nutzers. Dabei ist beim Sitzen der mittels des Windgeräuschunterdrückers zu entfernende Anteil vergleichsweise gering, wohingegen dieser beim Gehen erhöht ist. Beim Rennen ist dieser nochmals erhöht und beim Fahrradfahren noch weiter. Beispielsweise sind noch weitere derartige Klassen vorhanden, oder die vier Klassen sind abschließend. Alternativ oder in Kombination vorzugsweise werden in Abhängigkeit der Klassifikation auch weitere Einstellungen des Hörgeräts vorgenommen, insbesondere wird die Rauschunterdrückungseinheit in Abhängigkeit der Klassifikation der Aktivität eingestellt. In einer Weiterbildung wird auch eine Richtwirkung des Mikrofons in Abhängigkeit der jeweiligen Klasse eingestellt.

Besonders bevorzugt wird für aufeinanderfolgende Zeitintervalle eine Varianz der Messdaten ermittelt. Der Windgeräuschunterdrücker wird in Abhängigkeit der ermittelten Varianz eingestellt und somit anhand der erfassten Messdaten. Insbesondere wird hierbei anhand der Varianz die etwaige Klassifikation der Aktivität durchgeführt. Bei einer vergleichsweise hohen Varianz tritt eine vergleichsweise umfangreiche, abwechselnde Bewegung des Hörgeräts auf, sodass sich auch ein vergleichsweise hoher relativer Windanteil ergibt, der auf das etwaige Mikrofon auftrifft, sodass mit vergleichsweise hohen Windgeräuschen zu rechnen ist. Anhand der Varianz ist somit ein vergleichsweise genaues Einstellen des Windgeräuschunterdrückers angepasst auf die jeweilige aktuelle Situation möglich. Dabei sind zur Bestimmung der Varianz lediglich vergleichsweise wenige Ressourcen erforderlich, weswegen ein Aufwand zum Durchführen des Verfahrens und folglich ein Hardwarebedarf verringert ist. Beispielsweise liegen die Messdaten bereits eindimensional vor. Zweckmäßigerweise jedoch ist mittels dieser wird ein dreidimensionaler Vektor beschrieben. Insbesondere wird in diesem Fall die Varianz der Länge des Vektors ermittelt. Insbesondere ist die Länge der Zeitintervalle zwischen 1 Sekunde und 30 Sekunden, zwischen 5 Sekunden und 20 Sekunden und zweckmäßigerweise gleich 15 Sekunden. Auf diese Weise ist ein sicheres Bestimmen der Varianz ermöglicht, wobei bei einem Wechsel einer Aktivität des Trägers des Hörgeräts dennoch vergleichsweise kurzfristig eine Anpassung der Einstellung des Windgeräuschunterdrückers erfolgt.

Das Hörgerät weist vorzugsweise ein Mikrofon und/oder einen Hörer auf, zwischen die insbesondere eine Signalverarbeitungseinheit signaltechnisch geschaltet ist. Mittels dieser ist insbesondere ein Signalpfad gebildet, und das Mikrofon dient vorzugsweise dem Erfassen von Schall und der Hörer geeigneterweise dem Ausgeben von Schall. Beispielsweise ist das Hörgerät ein Kopfhörer oder umfasst einen Kopfhörer. Hierbei ist das Hörgerät beispielsweise als ein sogenanntes Headset ausgestaltet. Besonders bevorzugt ist das Hörgerät jedoch ein Hörhilfegerät. Das Hörhilfegerät dient der Unterstützung einer unter einer Verminderung des Hörvermögens leidenden Person. Mit anderen Worten ist das Hörhilfegerät ein medizinisches Gerät, mittels dessen beispielsweise ein partieller Hörverlust ausgeglichen wird. Das Hörhilfegerät ist beispielsweise ein "receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC), ein "complete-in-canal"-Hörhilfegerät (CIC) oder ein "invisible in the canal"-Hörhilfegerät (IIC), eine Hörbrille oder ein Taschenhörhilfegerät. Besonders bevorzugt ist das Hörhilfegerät ein Hinter-dem-Ohr-Hörhilfegerät ("Behind-the-Ear"-Hörhilfegerät), das hinter einer Ohrmuschel getragen wird.

Das Hörgerät weist einen Windgeräuschunterdrücker auf, der dem Entfernen/Reduzieren/Unterdrücken von Windgeräuschen dient. Hierfür ist der Windgeräuschunterdrücker geeignet, insbesondere vorgesehen und eingerichtet. Zweckmäßigerweise dient der Windgeräuschunterdrücker lediglich dem Unterdrücken von Windgeräuschen, jedoch nicht von sonstigen (Stör-)Geräuschen. Zudem weist der das Hörgerät einen Bewegungssensor auf. Vorzugsweise ist der Bewegungssensor in einem Gehäuse des Hörgeräts angeordnet, innerhalb dessen vorzugsweise auch der Windgeräuschunterdrücker angeordnet ist. Insbesondere ist der Bewegungssensor ein dreidimensionaler-Bewegungssensor, sodass dreidimensionale Bewegungen damit erfassbar sind. Insbesondere ist der Bewegungssensor ein Hardwaresensor.

Das Hörgerät ist gemäß einem Verfahren betrieben, bei dem der Windgeräuschunterdrücker in Abhängigkeit von mittels des Bewegungssensors erfassten Messdaten eingestellt wird. Zweckmäßigerweise ist die Signalverarbeitungseinheit geeignet, insbesondere vorgesehen und eingerichtet, das Verfahren zumindest teilweise durchzuführen. Beispielsweise erfolgt eine Analyse der Messdaten mittels der Signalverarbeitungseinheit.

Das Hörgerät umfasst zweckmäßigerweise einen Signalprozessor, der geeigneterweise die Signalverarbeitungseinheit bildet oder zumindest ein Bestandteil hiervon ist. Der Signalprozessor ist beispielsweise ein digitaler Signalprozessor (DSP) oder mittels analoger Komponenten realisiert. Mittels des Signalprozessors erfolgt insbesondere auch eine Anpassung eines mittels des Mikrofons erstellten (Audio-)Signals, vorzugsweise in Abhängigkeit eines etwaigen Hörverlust eines Trägers des Hörgeräts. Zweckmäßigerweise ist zwischen dem Mikrofon und der Signalverarbeitungseinheit, beispielsweise den Signalprozessor, ein A/D-Wandler angeordnet, sofern der Signalprozessor als digitaler Signalprozessor ausgestaltet ist. Der Signalprozessor ist insbesondere in Abhängigkeit eines Parametersatzes eingestellt. Mittels des Parametersatzes wird dabei eine Verstärkung in unterschiedlichen Frequenzbereichen vorgegeben, sodass das mittels des Mikrofons erstellte Signal entsprechend bestimmter Vorgaben bearbeitet wird, insbesondere in Abhängigkeit eines Hörverlust des Trägers des Hörgeräts. Besonders bevorzugt umfasst das Hörgerät zusätzlich einen Verstärker, oder der Verstärker ist mittels des Signalprozessors zumindest teilweise gebildet. Beispielsweise ist der Verstärker signaltechnisch dem Signalprozessor vor- oder nachgeschaltet.

Die im Zusammenhang mit den beiden Verfahren beschriebenen Weiterbildungen und Vorteile sind sinngemäß auch auf das Hörgerät / das Hörgerätesystem sowie untereinander zu übertragen und umgekehrt.

Nachfolgend wird ein Ausführungsbeispiel der Erfindung anhand einer Zeichnung näher erläutert. Darin zeigen:
- Fig. 1: schematisch ein Hörgerätesystem mit einem Hörgerät und einem externen Gerät,
- Fig. 2: ein Verfahren zum Betrieb des Hörgerätesystem, welches ein Verfahren zum Betrieb des Hörgeräts umfasst, und
- Fig. 3: den zeitlichen Verlauf von Messdaten eines Bewegungssensors des Hörgeräts.

Einander entsprechende Teile sind in allen Figuren mit den gleichen Bezugszeichen versehen.

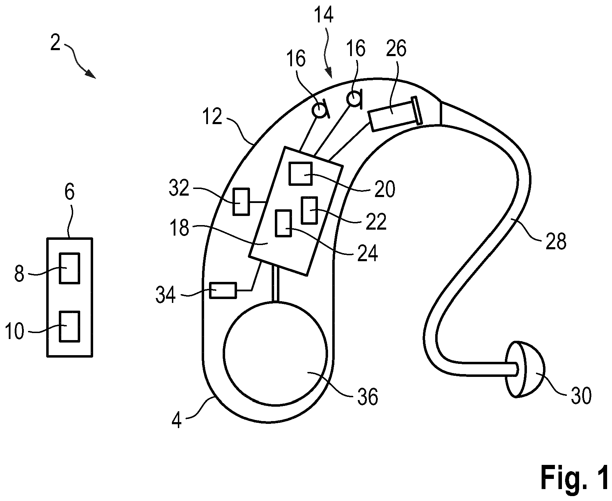

In Figur 1 ist schematisch vereinfacht ein Hörgerätesystem 2 dargestellt, das ein Hörgerät 4 und ein externes Gerät 6 aufweist. Das externe Gerät 6 ist als ein Smartphone ausgestaltet und weist einen weiteren Bewegungssensor 8 sowie eine weitere Funkvorrichtung 10 auf, die einem Bluetooth-Standard genügt. Mittels des weiteren Bewegungssensors 8 können dreidimensionale Bewegung des externen Geräts 6 erfasst werden.

Das Hörgerät 4 ist als ein Hörhilfegerät ausgestaltet, das vorgesehen und eingerichtet ist, hinter einem Ohr eines Trägers (Benutzer, Hörgeräteträger, Nutzer) getragen zu werden. Mit anderen Worten handelt es sich um ein Hinter-dem-Ohr-Hörhilfegerät ("Behind-the-Ear" - Hörhilfegerät). Das Hörgerät 4 umfasst ein Gehäuse 12, das aus einem Kunststoff gefertigt ist. Innerhalb des Gehäuses 12 ist ein Mikrofon 14 mit zwei Mikrofoneinheiten 16 in Form von jeweils elektromechanischen Schallwandlern angeordnet, die omnidirektional ausgestaltet sind. Indem ein zeitlicher Versatz zwischen den mittels der omnidirektionalen Mikrofoneinheiten 16 erfassten Audiosignalen (akustischen Signalen) verändert wird, ist es ermöglicht, eine Richtcharakteristik des Mikrofons 14 zu verändern, sodass ein Richtmikrofon realisiert ist. Die beiden Mikrofoneinheiten 16 sind mit einer Signalverarbeitungseinheit 18 signaltechnisch gekoppelt, die eine Verstärkerschaltung 20 mit einen Signalprozessor umfasst. Die Signalverarbeitungseinheit 18 ist ferner mittels Schaltungselementen gebildet, wie zum Beispiel elektrischen und/oder elektronischen Bauteilen. Der Signalprozessor ist ein digitaler Signalprozessor (DSP) und über einen nicht näher dargestellten A/D-Wandler signaltechnisch mit den Mikrofoneinheiten 16 verbunden.

Die Signalverarbeitungseinheit 18 weist ferner einen adaptive Rauschunterdrückungseinheit (ANC) 22 auf, die dem Ermittelten und Entfernen von Störgeräuschen in den bei Betrieb mittels der beiden Mikrofoneinheiten 16 erstellten Audiosignale dient. Auch umfasst die Signalverarbeitungseinheit 18 einen Windgeräuschunterdrücker 24, der dem Ermittelten und Entfernen von Windgeräuschen in den bei Betrieb mittels der beiden Mikrofoneinheiten 16 erstellten Audiosignale dient. Die Windgeräusche werden hierbei von einem Träger des Hörgeräts 4 ebenfalls als störend empfunden, weisen jedoch im Vergleich zu den Störgeräuschen andere Eigenschaften auf. So sind die Störgeräusche insbesondere künstlichen Ursprung und werden beispielsweise von einem Kühlschrank oder dergleichen hervorgerufen. Die Windgeräusche hingegen werden aufgrund eines auf die Mikrofoneinheit 16 auftreffenden Winds hervorgerufen, sodass diese nichtstationäre sind sowie vergleichsweise geringe Frequenzen aufweisen. In einer Variante sind die Rauschunterdrückungseinheit 22 und/oder der Windgeräuschunterdrücker 24 zumindest teilweise oder vollständig mittels Softwareroutinen und/oder dem Signalprozessor gebildet.

Bei Betrieb werden mittels der Mikrofoneinheit in 16 jeweils Audiosignale bereitgestellt, die mittels der Signalverarbeitungseinheit 18 weiterverarbeitet werden. Hierbei werden aus diesen mittels der Rauschunterdrückungseinheit 22 Störgeräusche und mittels des Windgeräuschunterdrückers 24 Windgeräusche entfernt, und mittels der Verstärkerschaltung 20 erfolgt ein anschließendes frequenzselektives Verstärken in Abhängigkeit eines Hörverlust des Trägers des Hörgeräts 4. Ferner werden die beiden Audiosignale zu einem gemeinsamen Signal vereinigt. Das auf diese Weise erstellte Signal wird bereitgestellt und zu einem signaltechnisch mit der Signalverarbeitungseinheit 18 gekoppelten Hörer 26 geleitet. Mittels des Hörers 26, der ein elektromechanischer Schallwandler ist, wird bei Betrieb das mittels der Signalverarbeitungseinheit 18 bereitgestellte (elektrische) Signal in einen Ausgabeschall gewandelt, also in Schallwellen. Diese werden in einen Schallschlauch 28 eingeleitet, dessen eines Ende an dem Gehäuse 12 befestigt ist. Das andere Ende des Schallschlauchs 28 ist mittels eines Doms 30 umschlossen, der im bestimmungsgemäßen Zustand in einem hier nicht näher dargestellten Gehörgang des Trägers des Hörgeräts 4, angeordnet ist.

Innerhalb des Gehäuses 12 ist ferner ein Bewegungssensor 32 angeordnet, der ein Beschleunigungssensor ist oder diesen zumindest umfasst. Somit ist es möglich, mittels des Bewegungssensor 32 eine Beschleunigung des Gehäuses 12 zu messen und hieraus auch, insbesondere mittels Integration, eine aktuelle Position des Gehäuses 12 zu ermitteln. Auch ist es dabei möglich, eine Neigung des Gehäuses 12 und daher auch eines Kopfes des Trägers 2 zu bestimmen. Innerhalb des Gehäuses 11 ist zudem eine Funkvorrichtung 34 angeordnet, die einem Bluetooth-Standard genügt, und mittels derer die Herstellung einer Funkverbindung mit dem externen Gerät 6 erfolgt.

Die Bestromung der Signalverarbeitungseinheit 18 erfolgt mittels einer in dem Gehäuse 12 angeordneten Batterie 36. Von der Signalverarbeitungseinheit 20 wird ein Teil der elektrischen Energie zu dem Bewegungssensor 32 sowie der Funkvorrichtung 34 geleitet. Auch werden mittels dieser elektrischen Energie das Mikrofon 14 sowie der Hörer 26 betrieben.

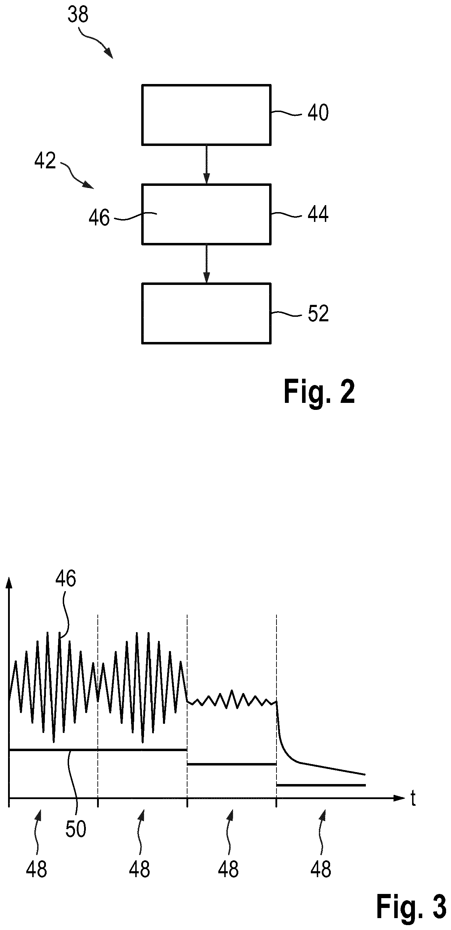

Das Hörgerätesystem 2 ist gemäß einem in Figur 2 dargestellten Verfahren zum Betrieb eines Hörgerätesystems 38 betrieben. In einem weiteren ersten Arbeitsschritt 40 werden mittels des weiteren Bewegungssensors 8 weitere Messdaten erstellt, die zu der Bewegung des externen Geräts 6 korrespondieren. Die weiteren Messdaten werden von der weiteren Funkverbindung 10 mittels Funks zu der Funkverbindung 34 des Hörgeräts 4 übermittelt und von dem Hörgerät 4 somit empfangen. Somit liegt in dem Hörgerät 4 ein Wissen über die Bewegung des externen Geräts 6 vor. Anschließend wird ein Verfahren 42 zum Betrieb eines Hörgeräts 4 gestartet. Mit anderen Worten umfasst das Verfahren 38 zum Betrieb eines Hörgerätesystems 2 das Verfahren 42 zum Betrieb eines Hörgeräts 4.

In einem ersten Arbeitsschritt 44 des Verfahrens 42 zum Betrieb eines Hörgeräts 4, das dem zweiten Verfahrensschritt des Verfahrens 38 zum Betrieb eines Hörgerätesystems 2entspricht, werden mittels des Bewegungssensors 32 Messdaten 46 erfasst. Dabei werden mittels des Bewegungssensors 32 die Bewegungen des Gehäuses 12 des Hörgeräts 4 dreidimensional erfasst und als Vektor gespeichert, der eine bestimmte Länge aufweist, die nachfolgend weiterverarbeitet wird, und deren zeitliche Verlauf in Figur 3 dargestellt ist.

Für aufeinanderfolgende Zeitintervalle 48, die jeweils 15 Sekunden betragen, wird eine Varianz 50 der Messdaten 46, also die Varianz der Länge des dreidimensionalen Vektors, bestimmt. In dem dargestellten Beispiel ist in den ersten beiden Zeitintervallen 48 die Varianz 50 vergleichsweise hoch und in der gleichen Größenordnung. Im nachfolgenden Zeitintervall 48 ist die Varianz 50 geringer und im letzten dargestellten Zeitintervall 48 nochmals verringert ist. Zusammenfassend wird somit für aufeinanderfolgende Zeitintervalle 48 die Varianz 50 der Messdaten 46 ermittelt.

In einem sich anschließenden zweiten Arbeitsschritt 52 wird anhand der Varianz 50 und somit anhand der Messdaten 46 eine Klassifikation einer Aktivität eines Nutzers des Hörgeräts 4, also des Trägers des Hörgeräts, durchgeführt. Hierbei stehen insgesamt vier verschiedene Klassen der Aktivität zur Verfügung, nämlich Fahrradfahren, Rennen, Gehen und Sitzen. Beim Sitzen ist die Varianz 50 vergleichsweise gering, wie in dem letzten dargestellten Zeitintervall 48. Beim Gehen ist die Varianz 50 etwas erhöht, wie in dem in Figur 3 vorletzten dargestellten Zeitintervall 48. Dahingegen ist beim Rennen sowie beim Fahrradfahren die Varianz 50 vergleichsweise groß, wie in den ersten beiden Zeitintervallen 48. Bei der Klassifikation werden ferner die mittels des weiteren Bewegungssensors 8 erstellten weiteren Messdaten berücksichtigt. Sofern das externe Gerät 6 mit einer vergleichsweise hohen Geschwindigkeit, jedoch gleichförmig, bewegt wird, wird als Klasse Fahrradfahren herangezogen. Falls hingegen ein ungleichmäßiges Bewegen erfolgt, wird die Aktivität als Rennen klassifiziert.

In Abhängigkeit der jeweiligen Klasse werden der Windgeräuschunterdrücker 24 sowie auch die Rauschunterdrückungseinheit 22 eingestellt. So werden die minimale als auch maximale Unterdrückungsleistung des Windgeräuschunterdrückers 24 eingestellt, also der minimale und maximale Anteil, der aus den beiden, mittels der Mikrofoneinheiten 16 bereitgestellten Audiosignalen mittels des Windgeräuschunterdrückers 24 herausgefiltert wird. Auch wird eine Anpassrate des Windgeräuschunterdrückers 24 eingestellt, also die Rate, mit der auf eine Veränderung von in dem jeweiligen Audiosignal erkannten Windgeräuschen mittels einer Änderung der Filterwirkung reagiert wird. So werden bei einer Klassifikation als Sitzen die maximale Unterdrückungsleistung und die minimale Unterdrückungsleistung abgesenkt sowie die Anpassrate auf ein Minimum reduziert. Bei der Klassifikation als Gehen wird die minimale Unterdrückungsleistung beibehalten, jedoch wird die maximale Unterdrückungsleistung sowie die Anpassrate geringfügig erhöht.

Sofern die Aktivität als Fahrradfahren oder Rennen klassifiziert wurde, wird die maximale Unterdrückungsleistung und auch die minimale Unterdrückungsleistung weiter erhöht. Da bei einem Fahrradfahren und Rennen der Kopf des Trägers des Hörgeräts 4 vergleichsweise starkem Fahrtwind oder sonstigen Wind ausgesetzt ist, werden somit vergleichsweise viele Windgeräusche herausgefiltert. Die Anpassrate wird ebenfalls erhöht, wobei diese bei der Klassifikation als Fahrradfahren im Vergleich zum Rennen geringfügig verringert ist, da bei einem Rennen eine stärkere Kopfbewegung und auch Richtungsänderung möglich ist, was zu erhöhten Windgeräuschen führt.

Zudem wird in Abhängigkeit der Klassifikation der Rauschunterdrücker 22 sowie die Direktionalität des Mikrofons 14 eingestellt. So wird bei der Klassifikation als Fahrradfahren oder Rennen die Direktionalität verringert, was ein gleichförmiges Erfassen von Schall um das Hörgerät 4 herum ermöglicht. Auf diese Weise ist es für den Träger ermöglicht, etwaige Gefahrenquellen, wie herannahendes Kraftfahrzeug, sicher zu erfassen. Ferner werden beim Rennen und Fahrradfahren die Unterdrückungsleistung der Rauschunterdrückungseinheit 22 vergleichsweise gering eingestellt, da Störgeräusche meist künstlichen Ursprung sind und sich an einem bestimmten Ort befinden. Dahingegen wird bei einem Sitzen oder Gehen die Rauschunterdrückungseinheit 20 derart eingestellt, dass ein vergleichsweise starkes Unterdrücken von Störgeräuschen erfolgt. Zusammenfassend wird somit in Abhängigkeit der ermittelten Varianz 50 die Klassifikation durchgeführt, und in Abhängigkeit der jeweiligen Klasse wird der Windgeräuschunterdrücker 24 eingestellt, sodass der Windgeräuschunterdrücker 24 in Abhängigkeit der ermittelten Varianz 50 sowie in Abhängigkeit der Messdaten 46 eingestellt wird.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: Hörgerätesystem
- 4: Hörgerät
- 6: externes Gerät
- 8: weiterer Bewegungssensor
- 10: weitere Funkvorrichtung
- 12: Gehäuse
- 14: Mikrofon
- 16: Mikrofoneinheit
- 18: Signalverarbeitungseinheit
- 20: Verstärkerschaltung
- 22: Rauschunterdrückungseinheit
- 24: Windgeräuschunterdrücker
- 26: Hörer
- 28: Schallschlauch
- 30: Dom
- 32: Bewegungssensor
- 34: Funkvorrichtung
- 36: Batterie
- 38: Verfahren zum Betrieb eines Hörgerätesystems
- 40: weiterer erster Arbeitsschritt
- 42: Verfahren zum Betrieb eines Hörgeräts
- 44: erster Arbeitsschritt
- 46: Messdaten
- 48: Zeitintervall
- 50: Varianz
- 52: zweiter Arbeitsschritt

## Patentansprüche

1. Verfahren (42) zum Betrieb eines Hörgeräts (4), insbesondere Hörhilfegerät, das einen Windgeräuschunterdrücker (24) und einen Bewegungssensor (32) aufweist, wobei der Windgeräuschunterdrücker (24) in Abhängigkeit von mittels des Bewegungssensors (32) erfassten Messdaten (46) eingestellt wird.

2. Verfahren (42) nach Anspruch 1,
**dadurch gekennzeichnet,**
**dass** eine maximale Unterdrückungsleistung eingestellt wird.

3. Verfahren (42) nach Anspruch 1 oder 2,
**dadurch gekennzeichnet,**
**dass** eine minimale Unterdrückungsleistung eingestellt wird.

4. Verfahren (42) nach einem der Ansprüche 1 bis 3,
**dadurch gekennzeichnet,**
**dass** eine Anpassrate eingestellt wird.

5. Verfahren (42) nach einem der Ansprüche 1 bis 4,
**dadurch gekennzeichnet,**
**dass** anhand der Messdaten (46) eine Klassifikation einer Aktivität eines Nutzers des Hörgeräts (4) durchgeführt wird, wobei der Windgeräuschunterdrücker (24) in Abhängigkeit der jeweiligen Klasse eingestellt wird.

6. Verfahren (42) nach einem der Ansprüche 1 bis 5,
**dadurch gekennzeichnet,**
**dass** für aufeinanderfolgende Zeitintervalle (48) eine Varianz (50) der Messdaten (46) ermittelt wird, wobei der Windgeräuschunterdrücker (24) in Abhängigkeit der ermittelten Varianz (50) eingestellt wird.

7. Hörgerät (4), insbesondere Hörhilfegerät, das einen Windgeräuschunterdrücker (24) und einen Bewegungssensor (32) aufweist, und das gemäß einem Verfahren (42) nach einem der Ansprüche 1 bis 6 betrieben ist.
